# EUROPÄISCHE PATENTSCHRIFT

(11) **EP 2 754 955 B1**
(45) Veröffentlichungstag und Bekanntmachung des Hinweises auf die Patenterteilung: **21.08.2019**
(21) Anmeldenummer: 13196748.1
(22) Anmeldetag: 11.12.2013
(51) Int. Cl.: F21V 15/01, F21V 33/00, F21W 131/302, F21V 19/00, F21Y 103/10, F21Y 115/10

(54) **Beleuchtungssystem**
Illumination system
Système d'éclairage

(30) Priorität: 11.01.2013 DE 202013100145 U
(43) Veröffentlichungstag der Anmeldung: 16.07.2014
(73) Patentinhaber: Schlüter-Systems KG, 58640 Iserlohn (DE)
(72) Erfinder: Schlüter, Werner, 58644 Iserlohn (DE)
(74) Vertreter: Schröter & Albrecht

(56) Entgegenhaltungen:
- EP-A1- 2 327 340
- WO-A1-2008/125183
- CN-A- 102 197 933
- DE-U1- 8 807 329
- DE-U1-202010 005 347
- FR-A1- 2 953 703

## Beschreibung

Die vorliegende Erfindung betrifft ein Beleuchtungssystem gemäß dem Oberbegriff von Anspruch 1.

Beleuchtungssysteme der genannten Art sind im Stand der Technik in unterschiedlichsten Ausgestaltungen bekannt und werden zum Begrenzen und Umleuchten eines an einem Untergrund angeordneten Gegenstands verwendet, wie beispielsweise eines Spiegels, der an einer Wand befestigt ist. Im einfachsten Fall kann beispielsweise eine LED-Leiste benachbart zu einem an einem Untergrund angeordneten Gegenstand angeordnet werden, wodurch dieser automatisch begrenzt und umleuchtet wird.

Beispielsweise werden von der WO 2008/125183 A1, der FR 2 953 703 A1 der DE 20 2010 005 347 U1, der EP 2 327 340 A1 oder der DE 88 07 329 U1 Beleuchtungssysteme zum Begrenzen und Umleuchten eines an einem Untergrund angeordneten Gegenstands vorgeschlagen.

Die CN 102 197 933 A offenbart ein gattungsgemäßes Beleuchtungssystem, dessen Profil allerdings einen zusätzlichen Leuchtmittelhalteabschnitt aufweist und daher bei teilweise verdeckter Montage einen entsprechenden lichten Abstand zwischen dem Untergrund und dem Spiegel erfordert.

Ausgehend von diesem Stand der Technik ist es eine Aufgabe der vorliegenden Erfindung, ein alternatives Beleuchtungssystem für den genannten Zweck zu schaffen.

Zur Lösung dieser Aufgabe schafft die vorliegende Erfindung ein Beleuchtungssystem der eingangs genannten Art gemäß dem kennzeichnenden Teil des Anspruchs 1.

Zum Begrenzen und Umleuchten eines an einem Untergrund angeordneten Spiegels wird das Beleuchtungssystem in einem ersten Schritt an einem Untergrund befestigt. In einem zweiten Schritt wird der Spiegel derart am Untergrund angebracht, dass er benachbart zum Beleuchtungssystem angeordnet ist und das an der Oberseite des Befestigungsabschnitts des Profils angeordnete Leuchtmittel abdeckt. Entsprechend wird der Spiegel optisch von dem Profil des Beleuchtungssystems eingefasst und nach Art eines Rahmens begrenzt. Durch das am Profil angeordnete Leuchtmittel wird der Spiegel zudem umleuchtet bzw. hinterleuchtet. Da das Leuchtmittel im bestimmungsgemäß angeordneten Zustand durch den Spiegel verdeckt wird, ergibt sich durch Anstrahlen des Begrenzungsabschnitts mit Licht eine indirekte Beleuchtung, die ein sehr angenehmes Erscheinungsbild aufweist.

Das Profil ist bevorzugt ein Strangprofil mit über die gesamte Länge gleichbleibendem Querschnitt. Strangprofile weisen den Vorteil auf, dass sie einfach und preiswert herstellbar sind.

Das Profil ist vorteilhaft aus Aluminium oder Edelstahl hergestellt. Aluminium und Edelstahl weisen nicht nur ein optisch sehr ansprechendes Erscheinungsbild auf sondern sind zudem korrosionsbeständig, so dass das Beleuchtungssystem auch in Nassräumen eingesetzt werden kann, wie beispielsweise in Badezimmern oder dergleichen. Bevorzugt weist das Profil eine Oberfläche mit mattem Erscheinungsbild auf. Da bei dem erfindungsgemäßen Beleuchtungssystem der Begrenzungsabschnitt des Profils direkt durch das Leuchtmittel angestrahlt wird, werden Dank einer solchen matten Oberfläche das Auge störende Reflektionen vermieden.

Der Befestigungsabschnitt des Profils ist gemäß einer Ausgestaltung der vorliegenden Erfindung an seiner Unterseite mit zumindest einem hinterschnittenen Hohlraum versehen. Dieser hinterschnittene Hohlraum dient zur Aufnahme von Verbindungselementen zur Fixierung der Stoßbereiche zweier aneinander grenzender Profile, die miteinander fluchtend oder winklig zueinander angeordnet sind. Ferner dient der hinterschnittene Hohlraum zur Verklammerung mit einem pastösen Kleber, wie beispielsweise Fliesenkleber, so dass das Profil problemlos mit einem entsprechenden Kleber am Untergrund befestigt werden kann. Dies ist insbesondere dann von Vorteil, wenn ein Spiegel beispielsweise in eine geflieste Wand integriert werden soll, bei der die Fliesen ebenfalls mit Fliesenkleber festgelegt werden. Entsprechend lässt sich die Befestigung des Profils des erfindungsgemäßen Beleuchtungssystems einfach in die Arbeit des Fliesenlegers integrieren. Alternativ oder zusätzlich kann an der Unterseite des Befestigungsabschnitts auch zumindest ein Gewebe oder Vlies befestigt sein, das derart ausgebildet ist, dass es ein Haftgrund für einen Kleber schafft, wie beispielsweise für einen Fliesenkleber.

Gemäß einer Ausgestaltung der vorliegenden Erfindung weist der Begrenzungsabschnitt des Profils einander gegenüber liegende Seitenwände auf, die über eine Verbindungswand miteinander verbunden sind, wobei die Außenfläche der Verbindungswand im bestimmungsgemäß angeordneten Zustand eine sichtbare Zierfläche bildet. Auf diese Weise kann eine breite Zierfläche bei wenig Materialeinsatz erzielt werden.

Das Leuchtmittel ist bevorzugt länglich ausgebildet, insbesondere in Form eines Streifens oder einer Kette mit einer Vielzahl von daran angeordneten LEDs.

Bevorzugt ist das Leuchtmittel an der Oberseite des Befestigungsabschnitts unter Verwendung zumindest eines Klebestreifens befestigt oder befestigbar. Hierdurch ergibt sich ein einfacher und preiswerter Aufbau.

Gemäß einer Ausgestaltung der vorliegenden Erfindung umfasst das Beleuchtungssystem ein längliches Streuscheibenelement, das im bestimmungsgemäß angeordneten Zustand des Beleuchtungssystems an der Oberseite des Befestigungsabschnitts zwischen dem Leuchtmittel und dem Begrenzungsabschnitt festlegbar ist. Das Streuscheibenelement dient dazu, das von dem Leuchtmittel emittierte Licht zu streuen, um auf diese Weise eine gleichmäßige Beleuchtung zu erzielen.

Die Festlegung des Streuscheibenelementes an dem Befestigungsabschnitt erfolgt bevorzugt über eine manuell lösbare Rastverbindung, so dass das Streuscheibenelement wahlweise angeordnet oder entfernt werden kann.

Erfindungsgemäß weist das Beleuchtungssystem abstandshaltende Mittel auf, die derart ausgebildet sind, dass sie den zu begrenzenden und zu umleuchtenden Spiegel im bestimmungsgemäß angeordneten Zustand derart positionieren, dass der Spiegel den Befestigungsabschnitt des Profils zumindest teilweise abdeckt.

Die abstandshaltenden Mittel umfassen vorteilhaft zumindest einen Magneten und zumindest eine an diesem magnetisch festlegbare Metallplatte. Der Magnet wird im bestimmungsgemäß angeordneten Zustand über ein erstes Befestigungsmittel, wie beispielsweise ein beidseitig klebender Klebestreifen, an einem Untergrund oder an dem Profil befestigt, während die Metallplatte über ein zweites Befestigungsmittel, bei dem es sich ebenfalls um einen beidseitig klebenden Klebestreifen handeln kann, an dem zu begrenzenden und zu umleuchtenden Spiegel festgelegt wird. Auf diese Weise wird eine lösbare Befestigung des Spiegels an dem Untergrund oder an dem Profil erzielt.

Das erfindungsgemäße Beleuchtungssystem wird, wie es bereits zuvor beschrieben wurde, zum Begrenzen und Hinterleuchten eines an einem Untergrund angeordneten Spiegels verwendet. Hierzu wird das Beleuchtungssystem in einem ersten Schritt an einem Untergrund befestigt, woraufhin der Spiegel in einem zweiten Schritt am Untergrund derart festgelegt wird, dass der Spiegel benachbart zum Beleuchtungssystem angeordnet ist und das an der Oberseite des Befestigungsabschnitts angeordnete Leuchtmittel abdeckt.

Zwischen dem Spiegel und dem Untergrund wird zumindest ein abstandshaltendes Mittel angeordnet, über das der zur Abdeckung des an dem Profil gehaltenen Leuchtmittels erforderliche Abstand realisiert wird.

Vorteilhaft wird das Profil des Beleuchtungssystems mit dem Untergrund verklebt, und zwar insbesondere unter Verwendung eines Fliesenklebers, wie es zuvor bereits erläutert wurde.

Ist das Profil des Beleuchtungssystems benachbart zu einer Plattenbekleidung angeordnet, so wird auch die Plattenbekleidung durch das Profil begrenzt, und zwar durch den Begrenzungsabschnitt. Vorteilhaft schließt dann die Höhe des Begrenzungsabschnitts im Wesentlichen bündig mit der Plattenbekleidung ab.

Weitere Vorteile und Merkmale der vorliegenden Erfindung werden anhand der nachfolgenden Beschreibung eines Beleuchtungssystems gemäß einer Ausführungsform der vorliegenden Erfindung unter Bezugnahme auf die beiliegende Zeichnung deutlich. Darin ist
- Figur 1: eine schematische perspektivische Teilansicht eines Beleuchtungssystems gemäß einer Ausführungsform der vorliegenden Erfindung und
- Figur 2: eine schematische Seitenansicht, die das in Figur 1 dargestellte Beleuchtungssystem im montierten Zustand zeigt;
- Figur 3: eine schematische perspektivische Ansicht eines Beleuchtungssystems gemäß einer zweiten Ausführungsform der vorliegenden Erfindung; und
- Figur 4: eine schematische perspektivische Ansicht eines Beleuchtungssystems gemäß einer dritten Ausführungsform der vorliegenden Erfindung.

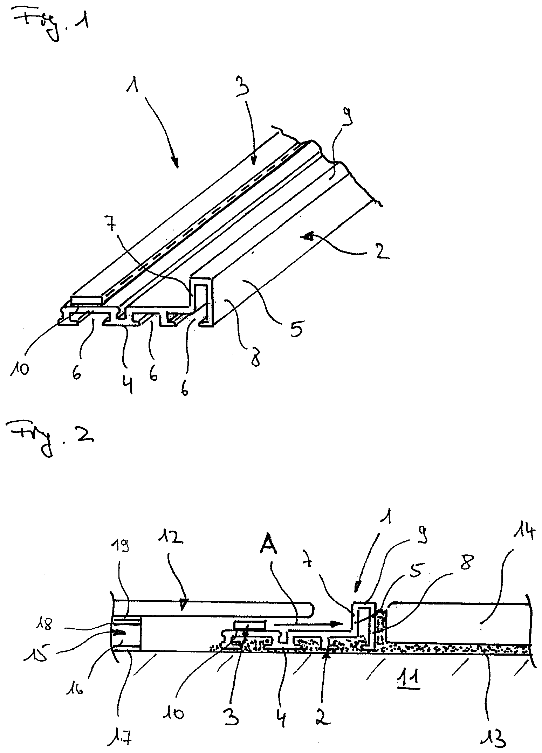

Figur 1 zeigt einen Teil eines Beleuchtungssystems 1 gemäß einer Ausführungsform der vorliegenden Erfindung. Das Beleuchtungssystem 1 umfasst als Hauptkomponenten ein längliches, im Wesentlichen L-förmig ausgebildetes Profil 2 und ein Leuchtmittel 3.

Bei dem Profil 2 handelt es sich um ein Strangprofil, das aus Aluminium oder Edelstahl mit einer matten Oberfläche hergestellt ist. Grundsätzlich können für das Profil 2 natürlich auch andere Materialien verwendet werden, wie beispielsweise Kunststoff oder dergleichen. Das Profil 2 umfasst einen Befestigungsabschnitt 4 und einen sich senkrecht zu diesem erstreckenden Begrenzungsabschnitt 5, wobei der Befestigungsabschnitt 4 und der Begrenzungsabschnitt 5 einteilig ausgebildet sind. Der Befestigungsabschnitt 4 ist an seiner Unterseite mit mehreren hinterschnittenen Hohlräumen 6 versehen. Alternativ oder zusätzlich kann an der Unterseite des Befestigungsabschnitts 4 auch zumindest ein vorliegend nicht näher dargestelltes Gewebe oder Vlies befestigt sein, das derart ausgebildet ist, dass es einen Haftgrund für einen Kleber schafft, wie beispielsweise für einen Fliesenkleber. Der Begrenzungsabschnitt 5 weist einander gegenüberliegende Seitenwände 7 und 8 auf, die über eine Verbindungswand 9 miteinander verbunden sind.

Bei dem Leuchtmittel 3 handelt es sich um einen länglichen Streifen mit einer Vielzahl von daran angeordneten LEDs. Das Leuchtmittel 3 ist an der Oberseite des Befestigungsabschnitts 4 des Profils 2 mit Abstand zum Begrenzungsabschnitt 5 unter Verwendung eines Klebestreifens 10 befestigt und derart ausgebildet und angeordnet, dass es im bestimmungsgemäß angeordneten Zustand Licht in Richtung des Begrenzungsabschnitts 5 abstrahlt.

Figur 2 zeigt das in Figur 1 dargestellte Beleuchtungssystem 1 im montierten Zustand, in dem es zum Begrenzen und Umleuchten eines an einem Untergrund 11, vorliegend einer Wand, angeordneten Gegenstands 12 dient, bei dem es sich um einen rechteckigen Spiegel handelt.

Bei der Montage des Beleuchtungssystems 1 an der Wand 11 wird die Wand 11 zunächst unter Verwendung eines Fliesenklebers 13 mit Fliesen 14 belegt, wobei derjenige Bereich, in dem der Spiegel 12 angeordnet werden soll, ausgespart wird. Angrenzend an die Fliesen 14 werden in einem weiteren Schritt Profile 2 des Beleuchtungssystems 1 ebenfalls unter Verwendung von Fliesenkleber 13 an der Wand 11 festgelegt, so dass die Profile 2 denjenigen Bereich, in dem anschließend der Spiegel 12 angeordnet werden soll, rahmenartig umgeben. Hierzu können die Profile 2 in den Eckbereichen auf Gehrung geschnitten werden, um nahtlose und optisch ansprechende Übergänge zu schaffen. Ferner können die einzelnen Profile 2 in den Stoßbereichen mit nicht näher dargestellten Verbindungselementen versehen und aneinander befestigt werden, wozu die Verbindungselemente in die Aussparungen 6 eingeschoben und in diesen festgelegt werden. Sobald das Profil 2 an der Wand 11 festgelegt ist, wird das Leuchtmittel 3 zurechtgeschnitten und unter Verwendung des Klebestreifens 10 auf die Oberseite des Befestigungsabschnitts 4 des Profils 2 mit Abstand zum Begrenzungsabschnitt 5 geklebt. Nunmehr wird der Spiegel 12 an der Wand 11 befestigt, wozu vorliegend mehrere abstandshaltende Mittel 15 verwendet werden. Jedes abstandshaltende Mittel 15 umfasst einen Magneten 16. An der einen Seite des Magneten 16 ist ein doppelseitig klebender Klebestreifen 17 angeordnet, mit dem der Magnet 16 an der Wand 11 festgelegt wird. An der anderen Seite des Magneten 16 ist über die Magnetkraft eine Metallplatte 18 gehalten, die wiederum über einen doppelseitig klebenden Klebestreifen 19 an der Rückseite des Spiegels 12 festgelegt wird. Dank der abstandshaltenden Mittel 15 ist es möglich, den Spiegel 12 derart anzuordnen, dass er das an der Oberseite des Befestigungsabschnitts 4 des Profils 2 angeordnete Leuchtmittel abdeckt. Für Wartungsarbeiten kann der Spiegel 12 unter Überwindung der Magnetkraft der jeweiligen Magneten 16 des abstandshaltenden Mittel 15 von der Wand 11 gelöst werden, so dass das Leuchtmittel 3 frei zugänglich ist.

Bei der in Figur 2 dargestellten Anordnung bilden die Verbindungswand 9 des Begrenzungsabschnitts 5 und ein Teil der Oberseite des Befestigungsabschnitts 4 von außen sichtbare Zierflächen. Die matte Oberfläche der Seitenwand 7 wird in Richtung des Pfeils A durch das Leuchtmittel 3 mit Licht angestrahlt, wodurch eine optisch ansprechende indirekte Umleuchtung des Spiegels 12 erzielt wird. Dank der matten Oberfläche des Profils 2 sind die einzelnen Lichtpunkte, die von dem Leuchtmittel 3 ausgesendet werden, für das Auge nicht erkennbar.

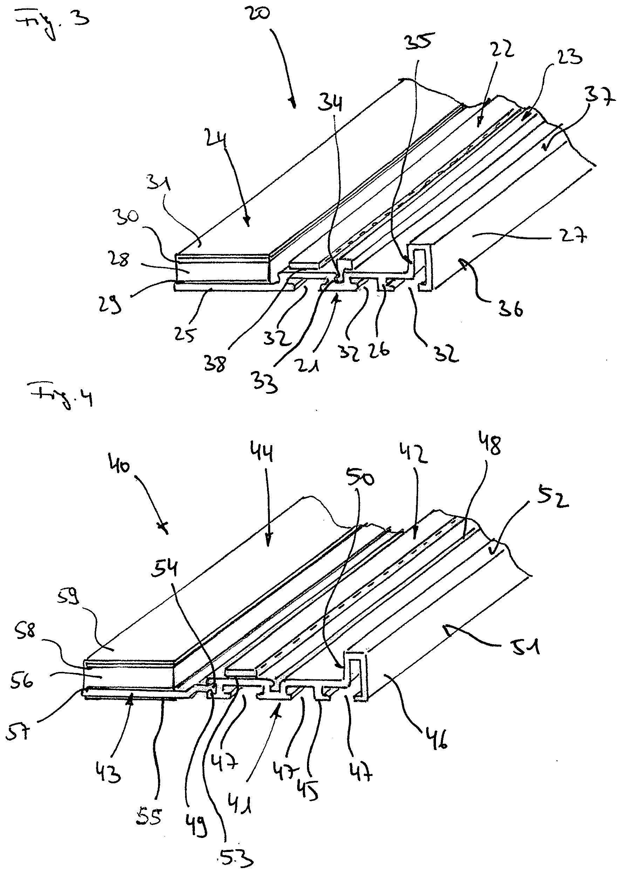

Figur 3 zeigt ein Beleuchtungssystem 20 gemäß einer zweiten Ausführungsform der vorliegenden Erfindung. Das Beleuchtungssystem 20 umfasst als Hauptkomponenten ein längliches, im Wesentlichen L-förmig ausgebildetes Profil 21, ein längliches Leuchtmittel 22, ein längliches Streuscheibenelement 23 und ein längliches abstandshaltendes Mittel 24.

Bei dem Profil 21 handelt es sich um ein Strangprofil, das aus Aluminium oder Edelstahl mit einer glänzenden Oberfläche hergestellt ist. Grundsätzlich können für das Profil 21 natürlich auch andere Materialien verwendet werden, wie beispielsweise Kunststoff oder dergleichen. Das Profil 21 umfasst einen Aufnahmeabschnitt 25, einen im Wesentlichen fluchtend zu diesem angeordneten Befestigungsabschnitt 26 und einen sich senkrecht zu dem Befestigungsabschnitt 26 erstreckenden Begrenzungsabschnitt 27, wobei die Abschnitte 25, 26 und 27 einteilig ausgebildet sind. An der Oberseite des Aufnahmeabschnitts 25 ist das abstandshaltende Mittel 24 angeordnet. Das abstandshaltende Mittel umfasst einen Magneten 28, der an seiner Unterseite über einen beidseitig klebenden Klebestreifen 29 an der Oberseite des Aufnahmeabschnitts 25 festgelegt ist. An der Oberseite des Magneten 28 ist über die Magnetkraft eine Metallplatte 30 gehalten, die wiederum über einen doppelseitig klebenden Klebestreifen 31 an einen Spiegel geklebt werden kann, wie beispielsweise an einen Spiegel 12 der in Figur 2 dargestellten Art. Der Befestigungsabschnitt 26 ist an seiner Unterseite mit mehreren hinterschnittenen Hohlräumen 32 versehen. Alternativ oder zusätzlich kann an der Unterseite des Befestigungsabschnitts 26 auch zumindest ein vorliegend nicht näher dargestelltes Gewebe oder Vlies befestigt sein, das derart ausgebildet ist, dass es einen Haftgrund für einen Kleber schafft, wie beispielsweise für einen Fliesenkleber. An der Oberseite des Befestigungsabschnitts 26 ist eine Aufnahmenut 33 vorgesehen, in die seitlich ein Haltevorsprung 34 des Streuscheibenelementes 23 eingeschoben werden kann, um das Streuscheibenelement 23 an der Oberseite des Befestigungsabschnitts 26 zwischen dem Leuchtmittel 22 und dem Begrenzungsabschnitt 27 festzulegen. Der Begrenzungsabschnitt 27 weist einander gegenüberliegende Seitenwände 35 und 36 auf, die über eine Verbindungswand 37 miteinander verbunden sind.

Bei dem Leuchtmittel 22 handelt es sich um einen länglichen Streifen mit einer Vielzahl von daran angeordneten LEDs. Das Leuchtmittel 22 ist an der Oberseite des Befestigungsabschnitts 26 des Profils 21 mit Abstand zum Begrenzungsabschnitt 27 unter Verwendung eines Klebestreifens 38 befestigt und derart ausgebildet und angeordnet, dass es im bestimmungsgemäß angeordneten Zustand Licht in Richtung des Begrenzungsabschnitts 27 abstrahlt.

Die Montage des Beleuchtungssystems 20 erfolgt im Wesentlichen analog zu der unter Bezugnahme auf Figur 2 beschriebenen Montage des Beleuchtungssystems 1. Da das abstandshaltende Mittel 23 bei dem Beleuchtungssystem 20 an dem Profil 21 befestigt ist, muss dieses nicht separat an dem Untergrund 11 befestigt werden, wodurch während der Endmontage Arbeitsschritte eingespart werden. Es sollte klar sein, dass anstelle eines abstandshaltenden Mittels 23 auch eine Vielzahl von beabstandet zueinander vorgesehenen abstandshaltenden Mitteln vorgesehen sein können, die entlang des Profils 2 an der Oberseite des Befestigungsabschnitts 26 festgelegt sind. Aufgrund der Tatsache, dass das Profil 21 eine glänzende Oberfläche aufweist, würden die von dem Leuchtmittel 22 ausgesendeten Lichtpunkte normalerweise am Begrenzungsabschnitt 27 jeweils reflektiert werden und somit für den Betrachter einzeln sichtbar sein, was bezüglich des sich einstellenden Erscheinungsbildes nicht immer wünschenswert ist. Um eine derart punktuelle Reflexion zu vermeiden, weist das Beleuchtungssystem 20 das Streuscheibenelement 23 auf, das optional an dem Befestigungsabschnitt angeordnet werden kann und für eine gleichmäßige Beleuchtung des Begrenzungsabschnitts 27 sorgt.

Figur 4 zeigt ein Beleuchtungssystem 40 gemäß einer dritten Ausführungsform der vorliegenden Erfindung. Das Beleuchtungssystem 40 umfasst als Hauptkomponenten ein längliches, im Wesentlichen L-förmig ausgebildetes Profil 41, ein längliches Leuchtmittel 42, ein längliches Aufnahmeprofil 43 und ein längliches abstandshaltendes Mittel 44.

Bei dem Profil 41 handelt es sich um ein Strangprofil, das aus Aluminium oder Edelstahl mit einer matten Oberfläche hergestellt ist. Grundsätzlich können für das Profil 41 natürlich auch andere Materialien verwendet werden, wie beispielsweise Kunststoff oder dergleichen. Das Profil 41 umfasst einen Befestigungsabschnitt 45 und einen sich senkrecht zu dem Befestigungsabschnitt 45 erstreckenden Begrenzungsabschnitt 46, wobei die Abschnitte 45 und 46 einteilig ausgebildet sind. Der Befestigungsabschnitt 45 ist an seiner Unterseite mit mehreren hinterschnittenen Hohlräumen 47 versehen. Alternativ oder zusätzlich kann an der Unterseite des Befestigungsabschnitts 45 auch zumindest ein vorliegend nicht näher dargestelltes Gewebe oder Vlies befestigt sein, das derart ausgebildet ist, dass es einen Haftgrund für einen Kleber schafft, wie beispielsweise für einen Fliesenkleber. An der Oberseite des Befestigungsabschnitts 45 ist eine Aufnahmenut 48 vorgesehen, in die seitlich analog zu Figur 3 ein Haltevorsprung eines Streuscheibenelementes eingeschoben werden kann, um das Streuscheibenelement an der Oberseite des Befestigungsabschnitts 45 zwischen dem Leuchtmittel 42 und dem Begrenzungsabschnitt 46 festzulegen, auch wenn dies vorliegend nicht dargestellt ist. Seitlich ist an dem Befestigungsabschnitt 45 eine hinterschnittene Verbindungsnut 49 vorgesehen. Der Begrenzungsabschnitt 46 weist einander gegenüberliegende Seitenwände 50 und 51 auf, die über eine Verbindungswand 52 miteinander verbunden sind.

Bei dem Leuchtmittel 42 handelt es sich um einen länglichen Streifen mit einer Vielzahl von daran angeordneten LEDs. Das Leuchtmittel 42 ist an der Oberseite des Befestigungsabschnitts 45 des Profils 41 mit Abstand zum Begrenzungsabschnitt 46 unter Verwendung eines Klebestreifens 53 befestigt und derart ausgebildet und angeordnet, dass es im bestimmungsgemäß angeordneten Zustand Licht in Richtung des Begrenzungsabschnitts 46 abstrahlt.

Das Aufnahmeprofil 43 weist seitlich einen korrespondierend zur Verbindungsnut 49 des Profils 41 ausgebildeten Verbindungsvorsprung 54 auf, der wahlweise mit der Verbindungsnut 49 in Eingriff gebracht werden kann, um das Aufnahmeprofil 43 mit dem Profil 41 zu verbinden. An der Unterseite des Aufnahmeprofils 43 ist ein Vlies oder Gewebe 55 befestigt, das als Haftgrund für einen Kleber dient, wie beispielsweise für einen Fliesenkleber. Entsprechend kann das Aufnahmeprofil 49 über das Vlies oder Gewebe 55 an einem Untergrund befestigt werden. An der Oberseite des Aufnahmeprofils 49 ist das abstandshaltende Mittel 44 angeordnet. Das abstandshaltende Mittel 44 umfasst einen Magneten 56, der an seiner Unterseite über einen beidseitig klebenden Klebestreifen 57 an der Oberseite des Aufnahmeprofils 49 festgelegt ist. An der Oberseite des Magneten 56 ist über die Magnetkraft eine Metallplatte 58 gehalten, die wiederum über einen doppelseitig klebenden Klebestreifen 59 an einem Gegenstand geklebt werden kann, wie beispielsweise an einen Gegenstand 12 der in Figur 2 dargestellten Art.

## Patentansprüche

1. Beleuchtungssystem (1; 20; 40) zur Befestigung an einem Untergrund (11) und zum Begrenzen und Umleuchten eines an diesem Untergrund (11) angeordneten Spiegels (12) mit
- zumindest einem länglichen Profil (2; 21; 41), das einen Befestigungsabschnitt (4; 26; 45) und einen sich quer, insbesondere senkrecht zu diesem erstreckenden Begrenzungsabschnitt (5; 27; 46) aufweist, und
- zumindest einem Leuchtmittel (3; 22; 42), das an dem Profil (2; 21; 41) mit Abstand zum Begrenzungsabschnitt (5; 27; 46) befestigt und derart ausgebildet und angeordnet ist, dass es im bestimmungsgemäß angeordneten Zustand Licht in Richtung des Begrenzungsabschnitts (5; 27; 46) abstrahlt,
wobei das Profil (2; 21; 41) im Wesentlichen L-förmig ausgebildet ist und aus dem Befestigungsabschnitt (4; 26; 45) und dem Begrenzungsabschnitt (5; 27; 46) besteht und wobei das zumindest eine Leuchtmittel (3; 22; 42) an der Oberseite des Befestigungsabschnitts (4; 26; 45) des Profils (2; 21; 41) befestigt ist, **dadurch gekennzeichnet, dass** das Beleuchtungssystem (1; 20; 40) abstandshaltende Mittel (15; 24; 44) aufweist, die derart ausgebildet sind, dass sie den zu begrenzenden und zu umleuchtenden Spiegel (12) im bestimmungsgemäß angeordneten Zustand derart positionieren, dass der Spiegel (12) den Befestigungsabschnitt (4; 26; 45) des Profils (2; 21; 41) zumindest teilweise abdeckt und das auf dessen Oberseite angeordnete Leuchtmittel (3; 22; 42) abdeckt.

2. Beleuchtungssystem (1; 20; 40) nach Anspruch 1, **dadurch gekennzeichnet, dass** das Profil (2; 21; 41) ein Strangprofil mit über die gesamte Länge gleich bleibendem Querschnitt ist.

3. Beleuchtungssystem (1; 20; 40) nach einem der vorhergehenden Ansprüche, **dadurch gekennzeichnet, dass** das Profil (2; 21; 41) aus Aluminium oder Edelstahl hergestellt ist.

4. Beleuchtungssystem (1; 20; 40) nach einem der vorhergehenden Ansprüche, **dadurch gekennzeichnet, dass** das Profil (2; 41) eine Oberfläche mit mattem Erscheinungsbild aufweist.

5. Beleuchtungssystem (1; 20; 40) nach einem der vorhergehenden Ansprüche, **dadurch gekennzeichnet, dass** der Befestigungsabschnitt (4; 26; 45) des Profils (2; 21; 41) an seiner Unterseite mit zumindest einem hinterschnittenen Hohlraum (6; 32; 47) versehen ist.

6. Beleuchtungssystem (1; 20; 40) nach einem der vorhergehenden Ansprüche, **dadurch gekennzeichnet, dass** der Begrenzungsabschnitt (5; 27; 46) des Profils (2; 21; 41) einander gegenüberliegende Seitenwände (7, 8; 35, 36; 50, 51) aufweist, die über eine Verbindungswand (9; 37; 52) miteinander verbunden sind, wobei die Außenfläche der Verbindungswand (9; 37; 52) im bestimmungsgemäß angeordneten Zustand eine sichtbare Zierfläche bildet.

7. Beleuchtungssystem (1; 20; 40) nach einem der vorhergehenden Ansprüche, **dadurch gekennzeichnet, dass** das Leuchtmittel (3; 22; 42) länglich ausgebildet ist, insbesondere in Form eines Streifens oder einer Kette mit einer Vielzahl von daran angeordneten LEDs.

8. Beleuchtungssystem (1; 20; 40) nach einem der vorhergehenden Ansprüche, **dadurch gekennzeichnet, dass** das Leuchtmittel (3; 22; 42) an der Oberseite des Befestigungsabschnitts (4; 26; 45) unter Verwendung zumindest eines Klebestreifens (10; 38; 53) befestigt oder befestigbar ist.

9. Beleuchtungssystem (20) nach einem der vorhergehenden Ansprüche, **dadurch gekennzeichnet, dass** dieses ein längliches Streuscheibenelement (23) aufweist, das im bestimmungsgemäß angeordneten Zustand des Beleuchtungssystems (20) an der Oberseite des Befestigungsabschnitts (26) zwischen dem Leuchtmittel (22) und dem Begrenzungsabschnitt (27) festlegbar ist.

10. Beleuchtungssystem (20) nach Anspruch 9, **dadurch gekennzeichnet, dass** die Festlegung des Streuscheibenelementes (23) an dem Befestigungsabschnitt (26) über eine manuell lösbare Rastverbindung erfolgt.

11. Beleuchtungssystem (1;20; 40) nach einem der vorhergehenden Ansprüche, **dadurch gekennzeichnet, dass** die abstandshaltenden Mittel (15; 24; 44) zumindest einen Magneten (16; 28; 56) und zumindest eine an diesem magnetisch festlegbare Metallplatte (18; 30; 58) umfassen.

## Claims

1. An illumination system (1; 20; 40) for fastening on a surface (11) and for defining and lighting around a mirror (12) positioned on said surface (11), comprising
- at least one elongated profile (2; 21; 41) that has a fastening section (4; 26; 45) and a limitation section (5; 27; 46) extending transversely, in particular perpendicularly to said fastening section, and
- at least one illuminant (3; 22; 42) that is fastened to the profile (2; 21; 41) at a distance from the limitation section (5; 27; 46) and is formed and positioned such that, in the correctly arranged state, it emits light in the direction of the limitation section (5; 27; 46),
wherein the profile (2; 21; 41) is essentially L-shaped and comprises the fastening section (4; 26; 45) and the limitation section (5; 27; 46), and wherein the at least one illuminant (3; 22; 42) is fastened to the top of the fastening section (4; 26; 45) of the profile (2; 21; 41), **characterised in that** the illumination system (1; 20; 40) has spacing means (15; 24; 44) that are formed such that, in the correctly arranged state, the mirror (12) to be defined and lit is positioned using the spacing means (15; 24; 44) such that the mirror (12) covers at least partially the fastening section (4; 26; 45) of the profile (2; 21; 41) and the illuminant (3; 22; 42) arranged on the top of the mirror.

2. The illumination system (1; 20; 40) according to claim 1, **characterised in that** the profile (2; 21; 41) is an extruded profile with a cross-section that remains the same over the entire length.

3. The illumination system (1; 20; 40) according to one of the preceding claims, **characterised in that** the profile (2; 21; 41) is made of aluminium or stainless steel.

4. The illumination system (1; 20; 40) according to one of the preceding claims, **characterised in that** the profile (2; 41) has a surface with a matt appearance.

5. The illumination system (1; 20; 40) according to one of the preceding claims, **characterised in that** the fastening section (4; 26; 45) of the profile (2; 21; 41) is provided on its bottom with at least one undercut cavity (6; 32; 47).

6. The illumination system (1; 20; 40) according to one of the preceding claims, **characterised in that** the limitation section (5; 27; 46) of the profile (2; 21; 41) has side walls (7, 8; 35, 36; 50, 51) opposite each other that are connected by a connecting wall (9; 37; 52), wherein in the correctly arranged state the outer surface of the connecting wall (9; 37; 52) forms a visible decorative surface.

7. The illumination system (1; 20; 40) according to one of the preceding claims, **characterised in that** the illuminant (3; 22; 42) is elongate in form, in particular in the form of a strip or a chain with a plurality of LEDs arranged along the same.

8. The illumination system (1; 20; 40) according to one of the preceding claims, **characterised in that** the illuminant (3; 22; 42) is fastened or can be fastened to the top of the fastening section (4; 26; 45) using at least one adhesive strip (10; 38; 53).

9. The illumination system (20) according to one of the preceding claims, **characterised in that** said system comprises an elongate diffusion disc element (23) that, in the correctly arranged state of the illumination system (20), can be fixed to the top of the fastening section (26) between the illuminant (22) and the limitation section (27).

10. The illumination system (20) according to claim 9, **characterised in that** the diffusion disc element (23) is fixed to the fastening section (26) by means of a manually releasable snap-on connection.

11. The illumination system (1; 20; 40) according to one of the preceding claims, **characterised in that** the spacing means (15; 24; 44) comprise at least one magnet (16; 28; 56) and at least one metal plate (18; 30; 58) that can be fixed magnetically thereto.

## Revendications

1. Système d'éclairage (1 ; 20 ; 40) destiné à être fixé au niveau d'un support (11) et servant à délimiter et à entourer de lumière un miroir (12) disposé au niveau dudit support (11), avec
- au moins un profil (2 ; 21 ; 41) allongé, qui présente une section de fixation (4 ; 26 ; 45) et une section de délimitation (5 ; 27 ; 46) s'étendant de manière transversale, en particulier de manière perpendiculaire par rapport à celle-ci, et
- au moins un moyen luminescent (3 ; 22 ; 42), qui est fixé au niveau du profil (2 ; 21 ; 41) à distance par rapport à la section de délimitation (5 ; 27 ; 46) et est réalisé et disposé de telle manière qu'il émet de la lumière en direction de la section de délimitation (5 ; 27 ; 46) dans l'état disposé de manière conforme à l'usage prévu,
dans lequel le profil (2 ; 21 ; 41) est réalisé de manière à présenter sensiblement une forme en L et est constitué de la section de fixation (4 ; 26 ; 45) et de la section de délimitation (5 ; 27 ; 46) et dans lequel l'au moins un moyen luminescent (3 ; 22 ; 42) est fixé au niveau du côté supérieur de la section de fixation (4 ; 26 ; 45) du profil (2 ; 21 ; 41), **caractérisé en ce que** le système d'éclairage (1 ; 20 ; 40) présente des moyens d'écartement (15; 24; 44), qui sont réalisés de telle manière qu'ils positionnent le miroir (12) à délimiter et à entourer de lumière dans l'état disposé de manière conforme à l'usage prévu de telle manière que le miroir (12) recouvre au moins en partie la section de fixation (4 ; 26 ; 45) du profil (2 ; 21 ; 41) et recouvre le moyen luminescent (3 ; 22 ; 42) disposé sur son côté supérieur.

2. Système d'éclairage (1 ; 20 ; 40) selon la revendication 1,
**caractérisé en ce que** le profil (2 ; 21 ; 41) est un profil extrudé avec une section transversale restant identique sur toute la longueur.

3. Système d'éclairage (1 ; 20 ; 40) selon l'une quelconque des revendications précédentes, **caractérisé en ce que** le profil (2 ; 21 ; 41) est fabriqué à partir d'aluminium ou d'acier inoxydable.

4. Système d'éclairage (1 ; 20 ; 40) selon l'une quelconque des revendications précédentes, **caractérisé en ce que** le profil (2 ; 41) présente une surface avec un aspect mat.

5. Système d'éclairage (1 ; 20 ; 40) selon l'une quelconque des revendications précédentes, **caractérisé en ce que** la section de fixation (4 ; 26 ; 45) du profil (2 ; 21 ; 41) est pourvue au niveau de son côté inférieur d'au moins un espace creux (6 ; 32 ; 47) contre-dépouillé.

6. Système d'éclairage (1 ; 20 ; 40) selon l'une quelconque des revendications précédentes, **caractérisé en ce que** la section de délimitation (5 ; 27 ; 46) du profil (2 ; 21 ; 41) présente des parois latérales (7, 8 ; 35, 36 ; 50, 51) se faisant face les unes les autres, qui sont reliées les unes aux autres par l'intermédiaire d'une paroi de liaison (9 ; 37 ; 52), dans lequel la surface extérieure de la paroi de liaison (9 ; 37 ; 52) forme dans l'état disposé de manière conforme à l'usage prévu une surface décorative visible.

7. Système d'éclairage (1 ; 20 ; 40) selon l'une quelconque des revendications précédentes, **caractérisé en ce que** le moyen luminescent (3 ; 22 ; 42) est réalisé de manière allongée, en particulier sous la forme d'une bande ou d'une chaîne avec une pluralité de DEL disposées au niveau de celle-ci.

8. Système d'éclairage (1 ; 20 ; 40) selon l'une quelconque des revendications précédentes, **caractérisé en ce que** le moyen luminescent (3 ; 22 ; 42) est fixé ou peut être fixé au niveau du côté supérieur de la section de fixation (4 ; 26 ; 45) en utilisant au moins une bande adhésive (10 ; 38 ; 53).

9. Système d'éclairage (20) selon l'une quelconque des revendications précédentes, **caractérisé en ce que** celui-ci présente un élément de disque diffuseur (23) allongé, qui peut être fixé dans l'état disposé de manière conforme à l'usage prévu du système d'éclairage (20) au niveau du côté supérieur de la section de fixation (26) entre le moyen luminescent (22) et la section de délimitation (27).

10. Système d'éclairage (20) selon la revendication 9, **caractérisé en ce que** la fixation de l'élément de disque diffuseur (23) au niveau de la section de fixation (26) est effectuée par l'intermédiaire d'une liaison par enclenchement de manière amovible manuellement.

11. Système d'éclairage (1 ; 20 ; 40) selon l'une quelconque des revendications précédentes, **caractérisé en ce que** les moyens d'écartement (15 ; 24 ; 44) comprennent au moins un aimant (16 ; 28 ; 56) et au moins une plaque métallique (18 ; 30 ; 58) pouvant être fixée de manière magnétique au niveau de celui-ci.
